# EUROPÄISCHE PATENTSCHRIFT

(11) **EP 3 129 124 B1**
(45) Veröffentlichungstag und Bekanntmachung des Hinweises auf die Patenterteilung: **29.04.2020**
(21) Anmeldenummer: 15714816.4
(22) Anmeldetag: 08.04.2015
(51) Int. Cl.: B01D 53/62, B01D 53/78, C05C 1/00, C05C 3/00, B01D 53/60, B01D 53/75

(54) **VORRICHTUNG SOWIE VERFAHREN ZUM HERSTELLEN VON DÜNGEMITTELN AUS ABGASEN EINER PRODUKTIONSANLAGE**
DEVICE AND METHOD FOR PRODUCING FERTILIZER FROM THE EXHAUST GASES OF A PRODUCTION SYSTEM
DISPOSITIF AINSI QUE PROCÉDÉ DE FABRICATION D'ENGRAIS À PARTIR DES EFFLUENTS GAZEUX D'UNE INSTALLATION DE PRODUCTION

(30) Priorität: 09.04.2014 DE 102014105030
(43) Veröffentlichungstag der Anmeldung: 15.02.2017
(73) Patentinhaber: Tischmacher, Heinz, 68723 Plankstadt (DE)
(72) Erfinder: Tischmacher, Heinz, 68723 Plankstadt (DE)
(74) Vertreter: Hamel, Armin
(86) Internationale Anmeldenummer: PCT/EP2015/057569
(87) Internationale Veröffentlichungsnummer: WO 2015/155208

(56) Entgegenhaltungen:
- WO-A1-2010/036436
- WO-A1-2012/176161
- CA-A1- 2 698 275
- CN-U- 202 683 045
- JP-A- H0 957 052
- US-A- 2 777 813
- US-B1- 7 255 842
- DATABASE WPI Week 201348 Thomson Scientific, London, GB; AN 2013-G36658 XP002741713, & CN 202 683 045 U (CAO G) 23. Januar 2013 (2013-01-23)
- DATABASE WPI Week 199719 Thomson Scientific, London, GB; AN 1997-207261 XP002741714, & JP H09 57052 A (KYOEI KOGYO KK) 4. März 1997 (1997-03-04)

## Beschreibung

Die Erfindung betrifft eine Vorrichtung sowie ein Verfahren zum Herstellen von Düngemitteln aus Abgasen einer Produktionsanlage.

Durch Produktionsanlagen, wie zum Beispiel Anlagen zur Zementherstellung, gelangt immer noch eine große Menge an Abgasen in die Atmosphäre. Insbesondere der CO₂-Fußabdruck hat in den letzten Jahren immer mehr an Bedeutung zugenommen, da CO₂ als Treibhausgas eingestuft wird. Dabei wurde in den letzten Jahren versucht, durch entsprechende Gegenmaßnahmen, zum Beispiel durch Regenwaldaufforstung oder CO₂-Speichersysteme, dem steigenden CO₂-Ausstoß entgegenzuwirken. Solche Gegenmaßnahmen sind jedoch nicht nur sehr teuer, sondern teilweise - beispielsweise was CO₂-Speichersysteme anbelangt - auch sehr umstritten.

Weitere Vorrichtungen und Verfahren geeignet zur Reduzierung der Abgasen werden in WO 2010/036436, CN 202 683 045 U, US 2 777 813, WO 2012/176161, JPH 0957052, US 7 255 842 und CA 2 698 275 offenbart.

Aufgabe der vorliegenden Erfindung ist es somit, eine Vorrichtung sowie ein Verfahren bereitzustellen, mit denen es möglich ist, das gesamte Abgas einer Produktionsanlage sinnvoll zu verwerten, ohne dass Abgase in die Atmosphäre abgelassen werden müssen.

Diese Aufgabe wird durch eine Vorrichtung gemäß Anspruch 1 sowie durch ein Verfahren gemäß Anspruch 5 gelöst.

Die Erfindung betrifft damit eine Vorrichtung zum Herstellen von Düngemitteln aus Abgasen einer Produktionsanlage, wobei die Vorrichtung die Abgase direkt aus der entsprechenden Produktionsanlage erhält. Bei solchen Produktionsanlagen kann es sich beispielsweise um eine Anlage zur Herstellung von Zement handeln. Die Vorrichtung weist einen ersten Behälter auf, der über eine erste Leitung mit einer Produktionsanlage verbunden ist. Dabei wird über diese erste Leitung ein Abgas aus der Produktionsanlage in den ersten Behälter eingebracht. Dieses Abgas enthält N₂, CO₂ sowie NOₓ und/oder SO₂, wobei in dem ersten Behälter N₂ und CO₂ von NOₓ und/oder SO₂ abtrennbar sind. Der erste Behälter ist über eine zweite Leitung mit einem zweiten Behälter verbunden, wobei über die zweite Leitung CO₂ und N₂ in den zweiten Behälter überführbar sind. In den zweiten Behälter ist über eine dritte Leitung eine Lösung enthaltend NH₃ einbringbar, wobei die Temperatur in dem zweiten Behälter derart einstellbar ist, dass NH₃ und CO₂ in der Lösung zu Ammoniumhydrogencarbonat reagieren. Dieses Ammoniumhydrogencarbonat kann als Dünger eingesetzt werden. Vorteilhaft ist dabei, dass das gesamte CO₂ zu Ammoniumhydrogencarbonat verarbeitet wird und somit nicht mehr als Abgas in die Atmosphäre gelangt.

Von Vorteil ist ferner, dass solche Vorrichtungen direkt neben den entsprechenden Produktionsanlagen aufgebaut werden können. Auch ist es möglich, dass Abgase mehrerer Produktionsanlagen in dieser Vorrichtung zu Düngemitteln verarbeitet werden. Neben Düngemitteln können auch noch solche Produkte hergestellt werden, die als Edukte für die Düngemittelherstellung oder als Edukte in der Produktionsanlage eingesetzt werden können.

In dem ersten Behälter ist ein Oxidationsmittel vorgesehen, das NOₓ und/oder SO₂ oxidiert, wobei die entsprechenden Oxidationsprodukte von NOₓ und/oder SO₂ in Lösung verbleiben. Dabei wird als Oxidationsmittel Ozon oder Permanganat eingesetzt. Bei der Lösung, in der sich das Oxidationsmittel befindet, handelt es sich um eine wässrige Lösung aus H₂SO₄. Diese Gase werden somit vollständig von dem CO₂-haltigen Gasgemisch entfernt.

Die Lösung enthaltend Ammoniumhydrogencarbonat wird über eine vierte Leitung in eine Kristallisationsvorrichtung überführt. In dieser Kristallisationsvorrichtung fällt Ammoniumhydrogencarbonat aus. Anschließend kann Ammoniumhydrogencarbonat in dieser Lösung noch umkristallisiert werden, so dass schließlich reines Ammoniumhydrogencarbonat erhalten wird. Dieses Ammoniumhydrogencarbonat zeichnet sich durch sehr gute Düngereigenschaften aus.

Die saure Lösung mit den Oxidationsprodukten von NOₓ und/oder SO₂ kann, zum Beispiel durch Abpumpen, aus dem ersten Behälter in einen dritten Behälter überführt werden. In diesem dritten Behälter wird diese saure Lösung mittels einer Lösung enthaltend NH₃ neutralisiert. Vorteilhaft ist dabei, dass diese Oxidationsprodukte ebenfalls zu Düngemitteln weiterverarbeitet werden können.

Die Lösung enthaltend NH₃ kann sich in einem Tanklager befinden. Dieses Tanklager ist über die dritte Leitung mit dem zweiten Behälter sowie über eine fünfte Leitung mit dem dritten Behälter verbunden. Es handelt sich hierbei um einen sehr einfachen Aufbau.

Die Produktionsanlage ist vorzugsweise eine Anlage zur Zementherstellung. Bei der Produktionsanlage kann es sich aber auch um eine Anlage zur Herstellung von Metallen handeln. In diesem Fall würde es sich bei dem Abgas um Hüttenrauch handeln. Vorteilhaft ist somit, dass diese Produktionsanlage zum Herstellen von Düngemitteln an jede Anlage angeschlossen werden kann, bei der CO₂ entsteht.

Das Oxidationsmittel ist Ozon oder Permanganat. Diese Oxidationsmittel besitzen gute Oxidationseigenschaften und sind preiswert zu haben. Besonders bevorzugt wird KMnO₄ eingesetzt, da dieses Oxidationsmittel ungiftig und deshalb einfach zu handhaben ist.

Die Erfindung betrifft ein Verfahren zur Herstellung von Düngemitteln aus Abgasen einer Produktionsanlage, zum Beispiel aus Abgasen einer Anlage zur Zementherstellung. Das Verfahren umfasst dabei folgende aufeinanderfolgende Schritte:
a) in einem ersten Behälter wird eine saure Lösung mit einem Oxidationsmittel bereitgestellt, wobei das Oxidationsmittel ein Permanganat oder Ozon ist und die wässrige Säure eine H₂SO₄-Lösung ist, wobei SO₂ zu SO₄²⁻ und/oder NOₓ zu NO₃⁻ oxidiert wird;
b) es wird ein Abgas, das aus der Produktionsanlage stammt, in den ersten Behälter geleitet, wobei das Abgas CO₂, N₂ sowie NOₓ und/oder SO₂ enthält;
c) NOₓ und/oder SO₂ werden in dem ersten Behälter oxidiert, während CO₂ und N₂ in einen zweiten Behälter abgeführt werden, wobei die Oxidationsprodukte von NOₓ und/oder SO₂ in der Lösung verbleiben;
d) in dem zweiten Behälter wird die Temperatur derart eingestellt, dass CO₂ mit einer in diesem zweiten Behälter vorgelegten Lösung enthaltend NH₃ zu Ammoniumhydrogencarbonat reagiert.

Vorteilhaft ist dabei, dass das gesamte CO₂ zu einem Düngemittel weiterverarbeitet und somit nicht in die Atmosphäre abgegeben wird.

Die Lösung enthaltend Ammoniumhydrogencarbonat wird anschließend in eine Kristallisationsvorrichtung geleitet. Dort kristallisiert Ammoniumhydrogencarbonat bei etwa 281 bis 283 K aus. Kristallisiert Ammoniumhydrogencarbonat bei diesen Temperaturen aus, so ist eine hohe Ausbeute zu erwarten.

Danach kann gegebenenfalls noch eine Umkristallisation stattfinden, wodurch sehr reines Ammoniumhydrogencarbonat erhalten wird.

Nachdem Ammoniumhydrogencarbonat auskristallisiert und gegebenenfalls umkristallisiert wurde, kann der Feststoff von der Lösung abgetrennt werden, so dass ein Feststoff mit nur einem geringen Wasseranteil erhalten wird.

Nachdem die Lösung entfernt wurde, kann der Feststoff getrocknet werden. Das so erhaltene Ammoniumhydrogencarbonat kann dann entweder Stoff in einem Lager gelagert oder mit weiteren Zusätzen versehen werden, die die Düngeeigenschaften bzw. die Lagereigenschaften des Düngemittels noch weiter verbessern.

Vorteilhaft ist, wenn N₂ nicht einfach in die Atmosphäre abgegeben wird, sondern zu NH₃ weiterverarbeitet wird. Dazu kann N₂ aus dem zweiten Behälter entfernt und in einen Reaktor enthaltend CaC₂ eingeleitet werden. In diesem Reaktor reagiert N₂ mit CaC₂ zu CaCN₂. Anschließend wird CaCN₂ in einen weiteren Reaktor eingebracht und mit Heißdampf versetzt, wobei CaCN₂ hydrolisiert wird und CaCO₃ und NH₃ entsteht. Wird N₂ zu NH₃ weiterverarbeitet, so wird ein Prozess bereitgestellt, bei dem alle erforderlichen Edukte für die Herstellung von Ammoniumhydrogencarbonat aus den Abgasen der Produktionsanlage stammen.

Das entstandene CaCO₃ kann dabei als Edukt wieder in den Produktionskreislauf zurückgeführt werden. Möglich ist aber auch, dass CaCO₃ aus dem Prozess entfernt und als Dünger verwendet oder weiterverarbeitet wird.

Das bei dem Herstellungsprozess entstandene NH₃ kann in einen Absorber geleitet werden. Durch anschließendes Einleiten von Wasser in den Absorber kann das absorbierte NH₃ wieder in Lösung überführt und in das Tanklager geleitet werden. Dabei kann die Konzentration von NH₃ in der Lösung genau eingestellt werden, so dass eine hohe Ausbeute an Ammoniumhydrogencarbonat erhalten wird

In dem Tanklager steht NH₃ dem Verfahren zur Herstellung von Düngemitteln wieder zur Verfügung. Da das NH₃ in diesem Herstellungsprozess erhalten wird, ist es deshalb nicht erforderlich, zusätzliches NH₃ bereitzustellen.

Als Oxidationsmittel wird bevorzugt KMnO₄ verwendet, weil KMnO₄ ungiftig und leicht zu handhaben ist.

In einem dritten Behälter kann die saure Lösung enthaltend SO₄²⁻ und/oder NO₃⁻ mit einer Lösung enthaltend NH₃ versetzt und somit neutralisiert werden.

Diese neutralisierte Lösung kann in eine Kristallisationsvorrichtung geleitet werden, in der NH₄NO₃ und/oder (NH₄)₂SO₄ auskristallisieren. Die so erhaltenen Stoffe weisen eine hohe Reinheit auf, wobei natürlich noch eine Umkristallisation stattfinden kann, um mögliche Fremdstoffe zu entfernen.

Die beiden Feststoffe NH₄NO₃ und/oder (NH₄)₂SO₄ können von der Lösung abgetrennt und anschließend getrocknet werden. NH₄NO₃ bzw. (NH₄)₂SO₄ können wiederum als stickstoffhaltiges Düngemittel eingesetzt werden.

Ammoniumhydrogencarbonat, NH₄NO₃ und/oder (NH₄)₂SO₄ finden als Dünger Verwendung. Vorteilhaft bei dem Verfahren ist somit, dass alle Abgase weiterverarbeitet werden, so dass kein Gas, insbesondere kein CO₂, NOₓ oder SO₂, in die Atmosphäre gelangt.

Die Erfindung wird anhand von Figuren beschrieben und im Folgenden näher erläutert. Es zeigen:
- Figur 1: eine schematische Darstellung der Vorrichtung zum Herstellen von Düngemitteln und
- Figur 2: eine schematische Darstellung einer Anlage zum Herstellen von NH₃, die Teil der Vorrichtung gemäß Figur 1 ist.

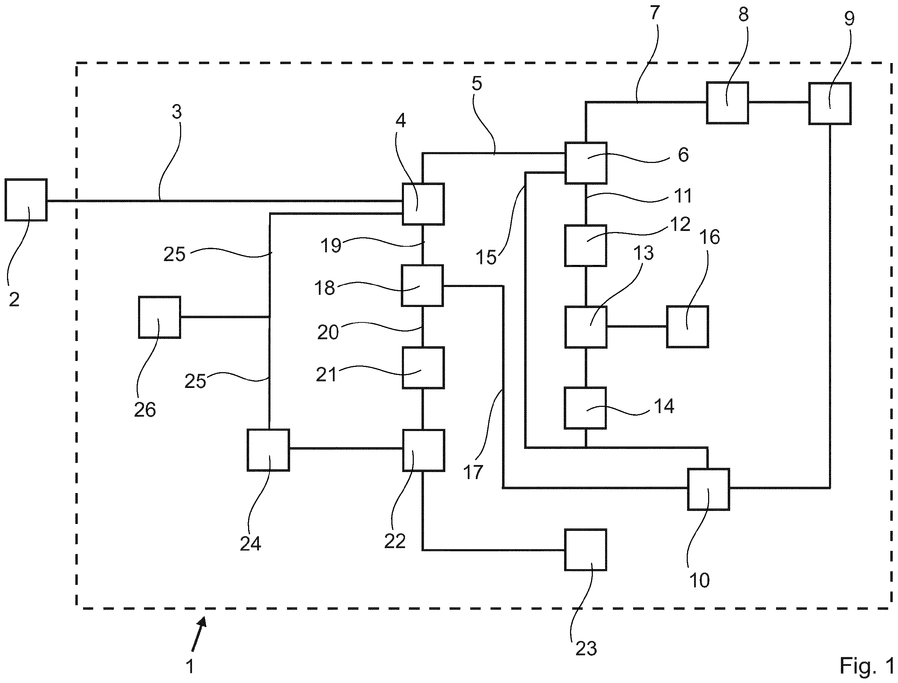

**Figur 1** zeigt eine Vorrichtung 1 zum Herstellen von Düngemitteln aus Abgasen einer Produktionsanlage 2. Bei dieser Produktionsanlage 2 kann es sich beispielsweise um eine Anlage zur Zementherstellung oder eine Anlage zur Metallherstellung handeln. Kommt das Abgas aus einer Anlage zur Zementherstellung, so enthält das Abgas CO₂, N₂, NOₓ und SO₂. Handelt es sich um ein bei der Metallherstellung anfallendes Hüttengas, so kann es beispielsweise CO₂, N₂ sowie SO₂ enthalten. Allgemein formuliert, enthält das Abgas somit CO₂, N₂ sowie NOₓ und/oder SO₂. In dem in Figur 1 gezeigten Ausführungsbeispiel handelt es sich bei der Produktionsanlage 2 um eine Anlage zur Zementherstellung, so dass das Abgas CO₂, N₂, NOₓ und SO₂ enthält, wobei NOₓ zum Beispiel 95 % NO und 5 % NO₂ aufweisen kann. Über eine erste Leitung 3 wird dabei das bei der Zementherstellung entstehende Abgas in einen ersten Behälter 4 eingeleitet, wobei es sich bei dem Behälter 4 um einen Reaktor handeln kann. In dem Behälter 4 befindet sich eine saure Lösung enthaltend ein Oxidationsmittel, z.B. KMnO₄, oder O₃. In dem Behälter 4 werden NOₓ sowie SO₂ oxidiert, wohingegen CO₂ und N₂ nicht oxidiert werden und den Behälter 4 über eine zweite Leitung 5 verlassen. Über diese zweite Leitung 5 gelangt CO₂ und N₂ in einen zweiten Behälter 6. In diesem zweiten Behälter 6 ist eine Lösung enthaltend NH₃ vorgelegt, durch die die Gasmischung enthaltend CO₂ und N₂ geleitet wird. Dabei ist die Temperatur in dem zweiten Behälter 6 derart einstellbar, dass aufgrund der Kinetik NH₃ und CO₂ in der Lösung zu Ammoniumhydrogencarbonat (NH₄HCO₃) reagieren, wobei das Ammoniumhydrogencarbonat im Wesentlichen in der wässrigen Lösung gelöst bleibt.

NH₃ + CO₂ + H₂O → NH₄HCO₃ (I)

Die Reaktionstemperatur in dem Behälter 6 liegt dabei zwischen 303 und 313 K und vorzugsweise bei 308 K.

Neben NH₄HCO₃ entstehen, in Abhängigkeit der molaren Verhältnisse der Edukte H₂O, CO₂ und NH₃ sowie der Temperatur, jedoch noch andere Verbindungen als Nebenprodukte (Reaktionen II bis VI).

So entsteht aufgrund des folgenden Gleichgewichts

NH₃ + CO₂ + H₂O ⇄ NH₄⁺ + HCO₃⁻ (II)

neben NH₄HCO₃ noch Ammoniumcarbonat (Reaktion III).

2 NH₄⁺+HCO₃⁻ + H₂O ⇄ (NH₄)₂CO₃·H₂O (III)

Ferner wird als Nebenprodukt auch eine Carbaminsäure gebildet (Reaktion IV).

NH₃ + CO₂ ⇄ H₂NCO₂H (IV)

H₂NCO₂H ist recht instabil und reagiert mit NH₃ weiter zu Ammoniumcarbamat (Reaktion V).

NH₃ + H₂NCO₂H ⇄ NH₂COONH₄ (V)

Weiterhin kann ein Sesqui-Carbonat entstehen (Reaktion VI).

4 NH₄⁺ + 2 HCO₃⁻ + CO₃²⁻ ⇄ (NH₄)₂CO₃ · 2 NH₄HCO₃ (VI)

Abhängig von der Temperatur liegen die unter II bis VI entstandenen Nebenprodukte als Feststoffe vor. Allerdings liegt das Gleichgewicht sehr stark auf der Seite der Edukte.

Die Lösung enthaltend Ammoniumhydrogencarbonat (Reaktion I) sowie die anderen Produkte (vergleiche Reaktionen II bis VI) wird über eine vierte Leitung 11 in eine Kristallisationsvorrichtung 12 überführt. In dieser Kristallisationsvorrichtung 12 können diese Produkte bei etwa 281 bis 283 K auskristallisieren. Ist das Molverhältnis von CO₂ zu NH₃ größer als 0,78, so entsteht fast ausschließlich Ammoniumhydrogencarbonat. Dabei kann eine Umkristallisation erfolgen, wobei aufgrund der Gibbsschen Phasenregel letztendlich nur eine feste Phase, nämlich Ammoniumhydrogencarbonat entsteht, weil dieser Feststoff die stabilste Verbindung darstellt. Es versteht sich, dass vor der Auskristallisation des Ammoniumhydrogencarbonats die Lösung noch entgast werden kann.

Die Kühlung der Kristallisationsvorrichtung 12 erfolgt mittels einer Wasser-Lithiumbromid-Absorptionskältemaschine. Dieses Ammoniumhydrogencarbonat wird getrocknet, zum Beispiel in einer Trockenkammer 16. Nachdem das Ammoniumhydrogencarbonat getrocknet wurde, kann es als Dünger verwendet werden. Dazu kann dem Ammoniumhydrogencarbonat zusätzlich ein Additiv zugegeben werden, damit das Ammoniumhydrogencarbonat gut gelagert werden kann und sich nicht zersetzt. Die Lösung enthaltend das auskristallisierte Ammoniumhydrogencarbonat wird in eine Kammer 13 überführt, in der das feste Ammoniumhydrogencarbonat von der Lösung getrennt wird. Dies kann beispielsweise durch Abzentrifugieren geschehen. Ammoniumhydrogencarbonat kann aber auch in Pressen oder Nutschen getrocknet werden. Die dadurch erhaltene Mutterlauge wird in ein Tanklager 14 für die Mutterlauge geleitet. Diese Mutterlauge kann dann wieder dem Prozesskreislauf zugeführt und mit der aus dem Tanklager 10 kommenden Lösung enthaltend NH₃ vermischt werden. Das Lösungsgemisch enthaltend die Mutterlauge sowie die Lösung enthaltend NH₃ wird über eine Leitung 15 wieder in den Behälter 6 eingebracht, in dem CO₂ mit NH₃ umgesetzt wird.

N₂ strömt dabei durch den Behälter 6, ohne eine Reaktion mit der NH₃-Lösung einzugehen, und verlässt den Behälter 6 wieder über eine Leitung 7. Über diese Leitung 7 wird N₂ in eine Anlage 8 zur Herstellung von NH₃ geleitet, wobei diese Anlage 8 Teil der Vorrichtung 1 zum Herstellen von Düngemitteln aus den Abgasen der Produktionsanlage 2 ist. Das in der Anlage 8 hergestellte gasförmige NH₃ wird in einen Kessel 9 eingeleitet, in dem ein Absorber angeordnet ist, der das gasförmige NH₃ absorbiert. In diesen Kessel kann Wasser eingebracht werden, um das NH₃ zu lösen. Es entsteht somit eine Lösung enthaltend NH₃. Diese NH₃-Lösung wird in ein Tanklager 10 für die NH₃-Lösung geleitet.

In dem ersten Behälter 4 ist in einer sauren Lösung ein Oxidationsmittel vorgesehen, wobei das Oxidationsmittel O₃ oder Permanganat ist, z.B. KMnO₄, sein. Als saure Lösung wird eine wässrige H₂SO₄-Lösung eingesetzt. Mit dem Oxidationsmittel reagiert SO₂ zu SO₄²⁻ und NO bzw. NO₂ zu NO₃⁻. Dabei wird in dem Behälter 4 SO₂ zuerst zu SO₃ oxidiert, wobei SO₃ in der sauren Lösung zu SO₄²⁻ bzw. HSO₄⁻ weiterreagiert, abhängig vom pH-Wert.

NO wird durch das vorhandene Oxidationsmittel zumindest teilweise zu NO₂ oxidiert, wobei NO und NO₂ in der wässrigen H₂SO₄-Lösung zu NO₂⁻ reagieren. Durch das Oxidationsmittel wird NO₂⁻ schließlich weiter zu NO₃⁻ umgesetzt.

Die Vorrichtung 1 umfasst auch einen dritten Behälter 18, in dem über eine fünfte Leitung 17 eine Lösung enthaltend NH₃ zugeführt werden kann. Die NH₃-Lösung kommt aus dem Tanklager 10. Die NH₃-Lösung wird dabei als Base vorgelegt, um die saure Lösung enthaltend NO₃⁻ sowie SO₄²⁻ zu neutralisieren. Sobald die NH₃-Lösung vorgelegt wurde, wird über eine dritte Leitung 19 die Lösung enthaltend NO₃⁻ sowie SO₄²⁻ hinzugefügt. Dabei kann die Lösung aus dem ersten Behälter 4 in den dritten Behälter 18 gepumpt werden. Anschließend wird die Lösung aus dem Behälter 18 über eine weitere Leitung 20 in eine Kristallisationsvorrichtung 21 überführt, beispielsweise durch Pumpen der Lösung in die Kristallisationsvorrichtung 21. In dieser Kristallisationsvorrichtung 21 werden bei niedriger Temperatur, vorzugsweise bei einer Temperatur von 278 bis 288 K und besonders bevorzugt bei einer Temperatur von 281 bis 283 K, NH₄NO₃ und (NH₄)₂SO₄ auskristallisiert. Die Kühlung erfolgt dabei mittels der Wasser-Lithiumbromid-Absorptionskältemaschine. NH₄NO₃ und (NH₄)₂SO₄ können zusätzlich noch umkristallisiert werden, um NH₄NO₃ und (NH₄)₂SO₄ in reiner Form zu erhalten. Die Lösung enthaltend die Kristalle von NH₄NO₃ und (NH₄)₂SO₄ werden in einen weiteren Behälter 22 eingebracht. In diesem Behälter 22 werden die Feststoffe von der Lösung abgetrennt und anschließend getrocknet. Das Abtrennen der Lösung kann beispielsweise in einer oder mehrerer Zentrifugen geschehen. Dabei können die Feststoffe in einer Trockenkammer 23 getrocknet werden. Die Energie zur Trocknung dieser Feststoffe kann aus der Wasser-Lithiumbromid-Absorptionskältemaschine bezogen werden. NH₄NO₃ und (NH₄)₂SO₄ können als Dünger verwendet werden oder können einer Düngemittelmischung zugegeben werden. Die abgetrennte Lösung (Mutterlauge) wird anschließend in ein Tanklager 24 eingebracht. Die Mutterlauge kann in einer weiteren Leitung 25 mit dem in der sauren Lösung befindlichen Oxidationsmittel vermischt werden und über diese Leitung 25 in den ersten Behälter 4 geleitet werden. Das in der sauren Lösung befindliche Oxidationsmittel wird dazu in einem Vorratstank 26 bereitgestellt.

Dadurch dass SO₂ vollständig zu (NH₄)₂SO₄ umgesetzt wird, können auch Edukte in den Produktionsanlagen eingesetzt werden, die einen hohen Schwefelgehalt aufweisen, da die Umwelt nicht mit schwefelhaltigen Gasen belastet wird. Auch kommt es nicht zur Belastung der Umwelt mit NOₓ, weil dieses Gas ebenfalls vollständig umgesetzt wird.

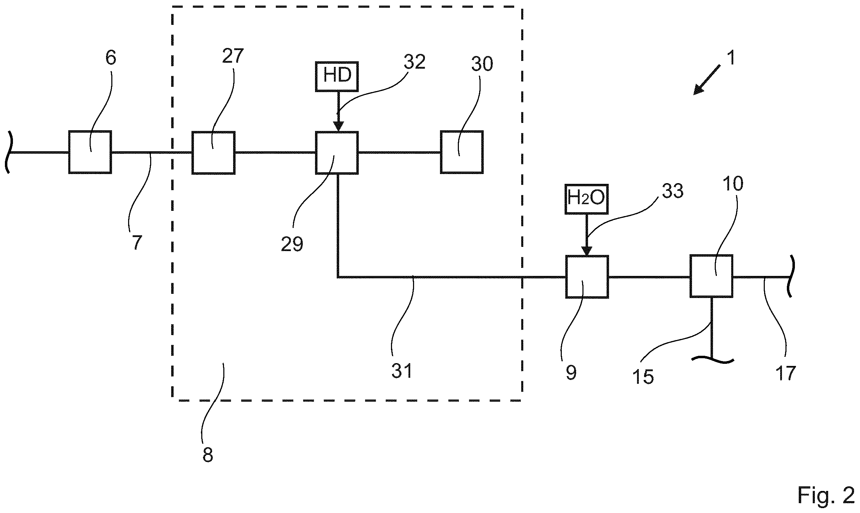

**Figur 2** zeigt eine schematische Darstellung einer Anlage 8 zum Herstellen von NH₃, die Teil der Vorrichtung 1 gemäß Figur 1 ist. Der aus dem zweiten Behälter 6 kommende Stickstoff wird in einen Reaktor 27 geleitet, in dem CaC₂ vorgelegt wurde. Vorzugsweise wird N₂, bevor dieses Gas in den Reaktor 27 geleitet wird, von Spurengasen gereinigt, was jedoch in der Figur 2 nicht gezeigt ist. Bei einer Temperatur von über 1023 K, vorzugsweise bei einer Temperatur von über 1273 K, findet eine Azotierung statt, bei der CaCN₂ entsteht. CaCN₂ wird in einen weiteren Reaktor 29 eingebracht, in dem CaCN₂ hydrolysiert wird (Reaktion VII), wobei NH₃ und CaCO₃ entsteht. Dazu wird Heißdampf (HD) in den Reaktor 29 eingeleitet (Pfeil 32), das heißt, es wird Wasserdampf in den Reaktor 29 eingebracht, der eine Temperatur von 573 bis 873 K aufweist.

CaCN₂ + 3 H₂O → CaCO₃ (s) + 2 NH₃ (g) (VII)

CaCO₃ fällt als Feststoff an und kann somit einfach aus dem Reaktor 29 entfernt werden. Nach Trocknung des CaCO₃, beispielsweise in einer Trockenkammer 30, kann CaCO₃ zur Herstellung von Düngemitteln verwendet werden oder wieder als Edukt in der Produktionsanlage, zum Beispiel bei einer Anlage zur Zementherstellung, eingesetzt werden.

Das gasförmige NH₃ wird über eine Leitung 31, bei der es sich - wie auch bei den anderen Leitungen der Vorrichtung 1 - um eine Rohrleitung handeln kann, in den Absorber 9 geleitet. Dort wird NH₃ absorbiert. Durch Zuführung von H₂O (Pfeil 33) kann nun eine Lösung enthaltend NH₃ hergestellt werden, die anschließend in das Tanklager 10 geleitet werden kann. Die in dem Tanklager 10 bereitgestellte Lösung enthaltend NH₃ kann nun wieder dem Verfahren zur Herstellung von Düngemitteln zur Verfügung gestellt werden.

Alternativ kann jedoch auch auf eine Hydrolyse von CaCN₂ verzichtet und CaCN₂ als Dünger eingesetzt werden.

### Bezugszeichenliste

- 1: Vorrichtung
- 2: Produktionsanlage
- 3: Leitung
- 4: Behälter
- 5: Leitung
- 6: Behälter
- 7: Leitung
- 8: Anlage
- 9: Kessel
- 10: Tanklager
- 11: Leitung
- 12: Kristallisationsvorrichtung
- 13: Kammer
- 14: Tanklager
- 15: Leitung
- 16: Trockenkammer
- 17: Leitung
- 18: Behälter
- 19: Leitung
- 20: Leitung
- 21: Kristallisationsvorrichtung
- 22: Behälter
- 23: Trockenkammer
- 24: Tanklager
- 25: Leitung
- 26: Vorratstank
- 27: Reaktor
- 28: -
- 29: Reaktor
- 30: Trockenkammer
- 31: Leitung
- 32: Pfeil
- 33: Pfeil

## Patentansprüche

1. Vorrichtung zum Herstellen von Düngemitteln aus Abgasen einer Produktionsanlage, wobei
- die Vorrichtung (1) einen ersten Behälter (4) aufweist, der über eine erste Leitung (3) mit der Produktionsanlage (1) verbunden ist, wobei über diese erste Leitung (3) ein Abgas aus der Produktionsanlage (2) in den ersten Behälter (4) einbringbar ist, wobei das Abgas N₂, CO₂ sowie NOₓ und/oder SO₂ enthält;
- in dem ersten Behälter (4) N₂ und CO₂ von NOₓ und/oder SO₂ abtrennbar sind;
- der erste Behälter (4) über eine zweite Leitung (5) mit einem zweiten Behälter (6) verbunden ist, wobei über die zweite Leitung (5) CO₂ und N₂ in den zweiten Behälter (6) überführbar sind und
- in den zweiten Behälter (6) über eine dritte Leitung (15) eine Lösung enthaltend NH₃ einbringbar ist, wobei die Temperatur in dem zweiten Behälter (6) derart einstellbar ist, dass NH₃ und CO₂ in der Lösung zu Ammoniumhydrogencarbonat reagieren, **dadurch gekennzeichnet, dass** die Lösung enthaltend Ammoniumhydrogencarbonat über eine vierte Leitung (11) in eine Kristallisationsvorrichtung (12) überführbar ist und in dieser Kristallisationsvorrichtung (12) Ammoniumhydrogencarbonat auskristallisierbar ist und dass in dem ersten Behälter (4) ein Oxidationsmittel in einer wässrigen Säure bereitgestellt wird, wobei die wässrigen Säure eine H₂SO₄-Lösung ist, wobei das Oxidationsmittel Ozon oder Permanganat ist, das NOₓ und/oder SO₂ oxidiert und wobei die Oxidationsprodukte von NOₓ und/oder SO₂ in der Lösung verbleiben.

2. Vorrichtung nach Patentanspruch 1, **dadurch gekennzeichnet, dass** die Lösung aus dem ersten Behälter (4) in einen dritten Behälter (18) überführbar ist und dass diese Lösung in dem dritten Behälter (18) mittels einer Lösung enthaltend NH₃ neutralisierbar ist.

3. Vorrichtung nach einem der vorangehenden Patentansprüche, **dadurch gekennzeichnet, dass** ein Tanklager (10) vorgesehen ist, in der die Lösung enthaltend NH₃ bereitgestellt wird, und dass das Tanklager (10) über die dritte Leitung (15) mit dem zweiten Behälter (6) sowie über eine fünfte Leitung (17) mit dem dritten Behälter (18) verbunden ist.

4. Vorrichtung nach einem der vorangehenden Patentansprüche, **dadurch gekennzeichnet, dass** die Produktionsanlage (2) eine Anlage zur Zementherstellung und/oder eine Anlage zur Metallherstellung ist.

5. Verfahren zum Herstellen von Düngemitteln aus Abgasen einer Produktionsanlage umfassend folgende aufeinanderfolgende Schritte:
a) in einem ersten Behälter der Vorrichtung wird ein Oxidationsmittel in einer wässrigen Säure bereitgestellt, wobei das Oxidationsmittel ein Permanganat oder Ozon ist und die wässrige Säure eine H₂SO₄-Lösung ist, wobei SO₂ zu SO₄²⁻ und/oder NOₓ zu NO₃⁻ oxidiert wird;
b) es wird ein Abgas, das aus einer Produktionsanlage kommt, in den ersten Behälter geleitet, wobei das Abgas CO₂, N₂ sowie NOₓ und/oder SO₂ enthält;
c) NOₓ und/oder SO₂ werden oxidiert, während CO₂ und N₂ in einen zweiten Behälter geleitet werden, wobei die Oxidationsprodukte von NOₓ und/oder SO₂ in der Lösung verbleiben;
d) in dem zweiten Behälter wird die Temperatur derart eingestellt, dass CO₂ mit einer in dem zweiten Behälter bereitgestellten Lösung enthaltend NH₃ zu Ammoniumhydrogencarbonat reagiert;
e) die Lösung enthaltend Ammoniumhydrogencarbonat in eine Kristallisationsvorrichtung geleitet wird, in der Ammoniumhydrogencarbonat auskristallisiert.

6. Verfahren nach Patentanspruch 5, **dadurch gekennzeichnet, dass** in der Kristallisationsvorrichtung eine Umkristallisation erfolgt, wodurch reines Ammoniumhydrogencarbonat erhalten wird.

7. Verfahren nach Patentanspruch 6, **dadurch gekennzeichnet, dass** Ammoniumhydrogencarbonat nach der Auskristallisation von der Lösung abgetrennt wird.

8. Verfahren nach Patentanspruch 6, **dadurch gekennzeichnet, dass** das von der Lösung abgetrennte Ammoniumhydrogencarbonat getrocknet wird.

9. Verfahren nach Patentanspruch 5, **dadurch gekennzeichnet, dass** N₂ aus dem zweiten Behälter entfernt und zu NH₃ weiterverarbeitet wird, wobei das Verfahren zur Herstellung von NH₃ folgende aufeinanderfolgende Schritte aufweist:
a) N₂ wird in einem Reaktor enthaltend CaC₂ eingebracht, in dem N₂ mit CaC₂ zu CaCN₂ reagiert;
b) CaCN₂ wird mittels Heißdampf zu CaCO₃ und NH₃ umgesetzt.

10. Verfahren nach Patentanspruch 9, **dadurch gekennzeichnet, dass** CaCO₃ als Edukt in der Anlage zur Zementherstellung eingesetzt wird.

11. Verfahren nach Patentanspruch 9, **dadurch gekennzeichnet, dass** NH₃ in einen Absorber überführt wird und dass NH₃ in diesem Absorber mit Wasser versetzt wird, so dass eine Lösung enthaltend NH₃ entsteht.

12. Verfahren nach Patentanspruch 11, **dadurch gekennzeichnet, dass** die Lösung enthaltend NH₃ wieder zur Herstellung von Ammoniumhydrogencarbonat eingesetzt wird.

13. Verfahren nach Patentanspruch 5, **dadurch gekennzeichnet, dass** die Lösung enthaltend S0₄²⁻ und/oder NO₃⁻ in einen dritten Behälter überführt und die Lösung in diesem dritten Behälter mittels einer Lösung enthaltend NH₃ versetzt wird.

14. Verfahren nach Patentanspruch 13, **dadurch gekennzeichnet, dass** die Lösung in eine Kristallisationsvorrichtung geleitet wird, in der NH₄NO₃ und/oder (NH₄)₂SO₄ auskristallisieren.

15. Verfahren Patentanspruch 14, **dadurch gekennzeichnet, dass** NH₄NO₃ und/oder (NH₄)₂SO₄ von der Lösung abgetrennt werden und diese Feststoffe anschließend getrocknet werden.

16. Verwendung des nach dem Verfahren nach den Patentansprüchen 5 bis 15 hergestellten Ammoniumhydrogencarbonats, NH₄NO₃ und/oder (NH₄)₂SO₄ als Dünger.

## Claims

1. Device for the production of fertilizer from waste gases of a production facility, wherein
- the device (1) comprises a first container (4) connected across a first line (3) with the production facility (1), wherein across this first line (3) a waste gas can be transferred from the production facility (2) into the first container (4), wherein the waste gas contains N₂, CO₂ as well as NOₓ and/or SO₂,
- in the first container (4) N₂ and CO₂ can be separated from NOₓ and/or SO₂,
- the first container (4) is connected across a second line (5) with a second container (6), wherein across the second the second line (5) CO₂ and N₂ can be transferred into the second container (6) and
- into the second container (6) across a third line (15) a solution containing NH₃ can be introduced, wherein the temperature in the second container (6) can be set such that NH₃ and CO₂ react in the solution to form ammonium hydrogen carbonate,
**characterized in that** the solution containing ammonium hydrogen carbonate is transferable across a fourth line (11) into a crystallization apparatus (12) and in this crystallization apparatus (12) ammonium hydrogen carbonate can be crystallized out and that in the first container (4) an oxidizing agent in an aqueous acid is provided, wherein the aqueous acid is an H₂SO₄ solution, wherein the oxidizing agent is ozone or permanganate which oxidize NOₓ and/or SO₂ and wherein the oxidation products of NOₓ and/or SO₂ remain in the solution.

2. Device as in patent claim 1, **characterized in that** the solution can be transferred from the first container (4) into a third container (18) and that this solution is neutralizable in the third container (18) by means of a solution containing NH₃.

3. Device as in one of the preceding patent claims, **characterized in that** a storage tank (10) is provided in which the solution containing NH₃ is provided and that the storage tank (10) is connected across the third line (15) with the second container (6) as well as being connected across a fifth line (17) with the third container (18).

4. Device as in one of the preceding patent claims, **characterized in that** the production facility (2) is a facility for the fabrication of cement and/or a facility for the fabrication of metal.

5. Method for the production of fertilizer from waste gases of a production facility, comprising the following sequential steps:
a) in a first container [4] of the device an oxidizing agent in an aqueous acid is provided, wherein the oxidizing agent is a permanganate or ozone and the aqueous acid is an H₂SO₄ solution, wherein SO₂ is oxidized to SO₄²⁻ and/or NOₓ is oxidized to NO₃⁻,
b) a waste gas originating from a production facility is conducted into the first container [4], wherein the waste gas contains CO₂, N₂ as well as NOₓ and/or SO₂,
c) NOₓ and/or SO₂ are oxidized, while CO₂ and N₂ are conducted into a second container [6], wherein the oxidation products of NOₓ and/or SO₂ remain in the solution,
d) In the second container [6] the temperature is set such that CO₂ reacts with an NH₃⁻containing solution to form ammonium hydrogen carbonate, which solution is provided in the second container [6],
e) the solution containing ammonium hydrogen carbonate [is] conducted into a crystallization apparatus in which ammonium hydrogen carbonate crystallizes out.

6. Method as in patent claim 5, **characterized in that** in the crystallization apparatus [12] recrystallization takes place by which pure ammonium hydrogen carbonate is obtained.

7. Method as in patent claim 6, **characterized in that** the ammonium hydrogen carbonate is separated from the solution after it has been crystallized out.

8. Method as in patent claim 6, **characterized in that** the ammonium hydrogen carbonate is dried after it has been separated from the solution.

9. Method as in patent claim 5, **characterized in that** N₂ is removed from the second container [6] and further processed to NH₃, wherein the method for the production of NH₃ comprises the following sequential steps:
a) N₂ is introduced into a CaC₂-containing reactor in which N₂ reacts with CaC₂ to form CaCN₂,
b) CaCN₂ is converted to CaCO₃ and NH₃ by means of superheated steam.

10. Method as in patent claim 9, **characterized in that** CaCO₃ is utilized as an educt in the facility for cement fabrication.

11. Method as in patent claim 9, **characterized in that** the NH₃ is transferred to an adsorption apparatus and that NH₃ in this adsorption apparatus is mixed with water such that a solution containing NH₃ is formed.

12. Method as in patent claim 11, **characterized in that** the NH₃-containing solution is utilized again for the production of ammonium hydrogen carbonate.

13. Method as in patent claim 5, **characterized in that** the solution containing S0₄²⁻ and/or NO₃⁻ is transferred into a third container [18] and the solution is converted in this third container by means of a solution containing NH₃.

14. Method as in patent claim 13, **characterized in that** the solution is conducted into a crystallization apparatus in which NH₄NO₃ and/or (NH₄)₂SO₄ crystallize out.

15. Method as in patent claim 14, **characterized in that** NH₄NO₃ and/or (NH₄)₂SO₄ are separated from the solution and these solids are subsequently dried.

16. Use as fertilizer of the ammonium hydrogen carbonate, NH₄NO₃ and/or (NH₄)₂SO₄, produced according to patent claims 5 to 15.

## Revendications

1. Dispositif pour la fabrication d'engrais à partir d'effluents gazeux d'une unité de production,
- le dispositif (1) comprenant un premier contenant (4), qui est raccordé par une première conduite (3) avec l'unité de production (1), un effluent gazeux issu de l'unité de production (2) pouvant être introduit dans le premier contenant (4) par cette première conduite (3), l'effluent gazeux contenant du N₂, du CO₂, ainsi que des NOₓ et/ou du SO₂ ;
- dans le premier contenant (4), le N2 et le CO2 pouvant être séparés des NOx et/ou du SO2 ;
- le premier contenant (4) étant raccordé par une deuxième conduite (5) avec un deuxième contenant (6), du CO2 et du N2 pouvant être transférés dans le deuxième contenant (6) par la deuxième conduite (5), et
- une solution contenant du NH3 pouvant être introduite par une troisième conduite (15) dans le deuxième contenant (6), la température dans le deuxième contenant (6) pouvant être ajustée de telle sorte que le NH3 et le CO2 réagissent dans la solution pour former de l'hydrogénocarbonate d'ammonium, **caractérisé en ce que** la solution contenant de l'hydrogénocarbonate d'ammonium peut être transférée par une quatrième conduite (11) dans un dispositif de cristallisation (12) et l'hydrogénocarbonate d'ammonium peut cristalliser dans ce dispositif de cristallisation (12), et **en ce qu'**un oxydant est mis à disposition dans un acide aqueux dans le premier contenant (4), l'acide aqueux étant une solution d'H2SO4, l'oxydant étant l'ozone ou le permanganate, qui oxyde les NOX et/ou le S02, et les produits d'oxydation des NOx et/ou du S02 restant dans la solution.

2. Dispositif selon la revendication 1, **caractérisé en ce que** la solution issue du premier contenant (4) peut être transférée dans un troisième contenant (18) et **en ce que** cette solution peut être neutralisée dans le troisième contenant (18) au moyen d'une solution contenant du NH₃.

3. Dispositif selon l'une quelconque des revendications précédentes, **caractérisé en ce qu'**un parc de stockage (10) est prévu, dans lequel la solution contenant du NH₃ est mise à disposition, et **en ce que** le parc de stockage (10) est raccordé par la troisième conduite (15) avec le deuxième contenant (6), ainsi que par une cinquième conduite (17) avec le troisième contenant (18).

4. Dispositif selon l'une quelconque des revendications précédentes, **caractérisé en ce que** l'unité de production (2) est une unité pour la fabrication de ciment et/ou une unité pour la fabrication de métaux.

5. Procédé de fabrication d'engrais à partir d'effluents gazeux d'une unité de production comprenant les étapes successives suivantes :
a) dans un premier contenant du dispositif, un oxydant est mis à disposition dans un acide aqueux, l'oxydant étant un permanganate ou l'ozone, et l'acide aqueux étant une solution d'H₂SO₄, du SO₂ étant oxydé en SO₄²⁻ et/ou des NOₓ étant oxydés en NO₃⁻ ;
b) un effluent gazeux, qui provient d'une unité de production, est acheminé dans le premier contenant, l'effluent gazeux contenant du CO₂, du N₂, ainsi que des NOₓ et/ou du SO₂ ;
c) les NOₓ et/ou le SO₂ sont oxydés, tandis que le CO₂ et le N₂ sont acheminés dans un deuxième contenant, les produits d'oxydation des NOₓ et/ou du SO₂ restant dans la solution ;
d) la température dans le deuxième contenant est ajustée de telle sorte que le CO₂ réagisse avec une solution contenant du NH₃ mise à disposition dans le deuxième contenant pour former de l'hydrogénocarbonate d'ammonium ;
e) la solution contenant de l'hydrogénocarbonate d'ammonium est acheminée dans un dispositif de cristallisation, dans lequel l'hydrogénocarbonate d'ammonium cristallise.

6. Procédé selon la revendication 5, **caractérisé en ce qu'**une recristallisation a lieu dans le dispositif de cristallisation, ce qui permet d'obtenir de l'hydrogénocarbonate d'ammonium pur.

7. Procédé selon la revendication 6, **caractérisé en ce que** l'hydrogénocarbonate d'ammonium est séparé de la solution après la cristallisation.

8. Procédé selon la revendication 6, **caractérisé en ce que** l'hydrogénocarbonate d'ammonium séparé de la solution est séché.

9. Procédé selon la revendication 5, **caractérisé en ce que** du N₂ est éliminé à partir du deuxième contenant et transformé en NH₃, le procédé de fabrication de NH₃ comprenant les étapes successives suivantes :
a) du N₂ est introduit dans un réacteur contenant du CaC₂, dans lequel le N₂ réagit avec le CaC₂ pour former du CaCN₂ ;
b) le CaCN₂ est transformé au moyen de vapeur surchauffée en CaCO₃ et NH₃.

10. Procédé selon la revendication 9, **caractérisé en ce que** le CaCO₃ est utilisé en tant que réactif dans l'unité de fabrication de ciment.

11. Procédé selon la revendication 9, **caractérisé en ce que** le NH₃ est transféré dans un absorbeur et **en ce que** le NH₃ est mélangé dans cet absorbeur avec de l'eau, de telle sorte qu'une solution contenant du NH₃ soit formée.

12. Procédé selon la revendication 11, **caractérisé en ce que** la solution contenant du NH₃ est réutilisée pour la fabrication d'hydrogénocarbonate d'ammonium.

13. Procédé selon la revendication 5, **caractérisé en ce que** la solution contenant du SO₄²⁻ et/ou du NO₃⁻ est transférée dans un troisième contenant et la solution est mélangée dans ce troisième contenant avec une solution contenant du NH₃.

14. Procédé selon la revendication 13, **caractérisé en ce que** la solution est acheminée dans un dispositif de cristallisation, dans lequel du NH₄NO₃ et/ou du (NH₄)₂SO₄ cristallisent.

15. Procédé selon la revendication 14, **caractérisé en ce que** le NH₄NO₃ et/ou le (NH₄)₂SO₄ sont séparés de la solution, puis ces solides sont séchés.

16. Utilisation de l'hydrogénocarbonate d'ammonium, du NH₄NO₃ et/ou du (NH₄)₂SO₄ fabriqués par le procédé selon les revendications 5 à 15 en tant qu'engrais.
